# EUROPEAN PATENT SPECIFICATION

(11) **EP 3 624 030 B1**
(45) Date of publication and mention of the grant of the patent: **12.04.2023**
(21) Application number: 19196509.4
(22) Date of filing: 10.09.2019
(51) Int. Cl.: G06Q 10/08, G06Q 30/06, G06Q 50/30

(54) **METHOD AND SYSTEM FOR BULK ASSETS LEASING**
VERFAHREN UND SYSTEM ZUM LEASING VON MASSENASSETS
PROCÉDÉ ET SYSTÈME DE LOCATION D'ACTIFS EN VRAC

(30) Priority: 14.09.2018 US 201816131661
(43) Date of publication of application: 18.03.2020
(73) Proprietor: BlackBerry Limited, Waterloo, Ontario N2K 0A7 (CA)
(72) Inventor: KUGLER, Andrew, Waterloo, Ontario N2K 0A7 (CA); BRIMNER, Michael, Waterloo, Ontario N2K 0A7 (CA)
(74) Representative: MERH-IP Matias Erny Reichl Hoffmann Patentanwälte PartG mbB

(56) References cited:
- WO-A1-2017/059112
- US-A1- 2015 185 034
- US-A1- 2017 091 856
- US-A1- 2017 123 421
- US-A1- 2018 038 991

## Description

### FIELD OF THE DISCLOSURE

The present disclosure relates to the transportation of goods, and in particular relates to leasing of transportation assets.

### BACKGROUND

During the transporting goods, often specific types of assets are required by a transportation company. In some cases, the transportation company may have excess assets and may be willing to lease those assets to other companies to avoid the asset sitting idly.

In other cases, a transportation company may require assets and may signal to other companies that such assets are required in order to determine whether another transportation company may have excess assets to lease to the transportation company.

The assigning of assets to a lessee, tracking and assigning of policies to such assets, and return of such assets to the lessor is difficult.

US2014/357295A1 relates to geospatial asset tracking systems for acquiring, manipulating and presenting telematic metadata. The system provides for a governance system to help manage and maintain the plurality of semi-autonomous devices that will be loosely coupled to and communicate via the Internet or other network, more commonly referred to as the network of things.

US2014/357295 discloses a system which provides alert notifications when received sensor data from assets or vehicles deviates from a certain policy based on temperature or zone entry/exit.

### BRIEF DESCRIPTION OF THE DRAWINGS

The present disclosure will be better understood with reference to the drawings, in which:
**Figure 1** is a block diagram showing an example container yard;
**Figure 2** is a block diagram of an example sensor apparatus capable of being used with the embodiments herein;
**Figure 3** is a block diagram showing communications between servers and shipping containers;
**Figure 4** is an example user interface for leasing of transportation assets;
**Figure 5** is a block diagram showing entries in a database for asset management;
**Figure 6** is a block diagram showing entries in a database for asset management in which leased assets are temporarily duplicated;
**Figure 7** is a process diagram showing a process at a server for leasing and returning an asset;
**Figure 8** is a process diagram showing a process at a server for applying different policies to event data from a sensor apparatus; and
**Figure 9** is a block diagram of an example computing device capable of being used in accordance with the embodiments of the present disclosure.

### DETAILED DESCRIPTION

The present disclosure provides a method at a computing device within an asset management system according to claim 1.

The present disclosure further provides a computing device within an asset management system according to claim 9.

The present disclosure further provides a computer readable medium for storing instruction code according to claim 10.

A customer or lessor can have multiple leasing partners and many assets. It can be time-consuming to individually select assets and assign them to other customer leasing partners. Further, it can be time consuming for the lessee to assign policies to each asset that is being leased. Therefore, in accordance with the present disclosure, group selection of assets for the assigning of assets to a lessor is provided. For example, in one case a group of assets can be dragged together on a desktop screen or mobile device and placed into a box or bucket associated with a lessee.

In some cases, a list of potential customer lessees can be made available while the assets are being dragged. In other cases, a leasing screen can be entered and the names or lists of lessees can be fixed on the screen. The lessees are represented by a box, bucket with the customer name as the lessee.

The selected assets can be dropped onto the customer box, which then automatically assigns these assets to the lessee. The automatic assigning of the assets includes temporary duplication of the database entries for such assets to associate such assets with both the lessor and the lessee. In this regard, policies for notification of events or other actions associated with the asset are based on defaults preconfigured by the lessee. For example, thresholds for low temperature warnings, geofence areas required for notification, acceleration event thresholds, deceleration event thresholds, among other configurable parameters may be preconfigured by the lessee and every asset assigned to the lessee may be assigned such as default policy. The lessee could then change the policy for each specific asset in some cases.

The policy for the asset may therefore differ between the lessor and the lessee.

In one embodiment, if an asset is leased, notification based on the varied policy between the lessor and the lessee may be made to the respective lessor or lessee based on the different policies.

In some embodiments, a lessor can confirm an intention to lease the assets, for example by providing an "Are you sure?" pop up, among other options. On confirmation, the assets may be automatically considered to be leased.

In some cases, assets can also be dragged out of the lessee, back into the original lessor's pool of assets.

Further, once assets have been leased, optional triggers may be sent to a dispatcher to direct these assets to a specific geofence or location if desired. In this way, physical assets such as trucks or trailers will arrive at the lessee's geofence for use.

While the disclosure below considers assets to be trailers, this is not limiting. In other cases, railcars, ships, or other transportation assets may equally be utilized with the systems described herein. In still further cases, assets not related to the transportation of goods may also benefit from the systems and methods provided herein. The use of trailers is therefore only provided for illustration purposes.

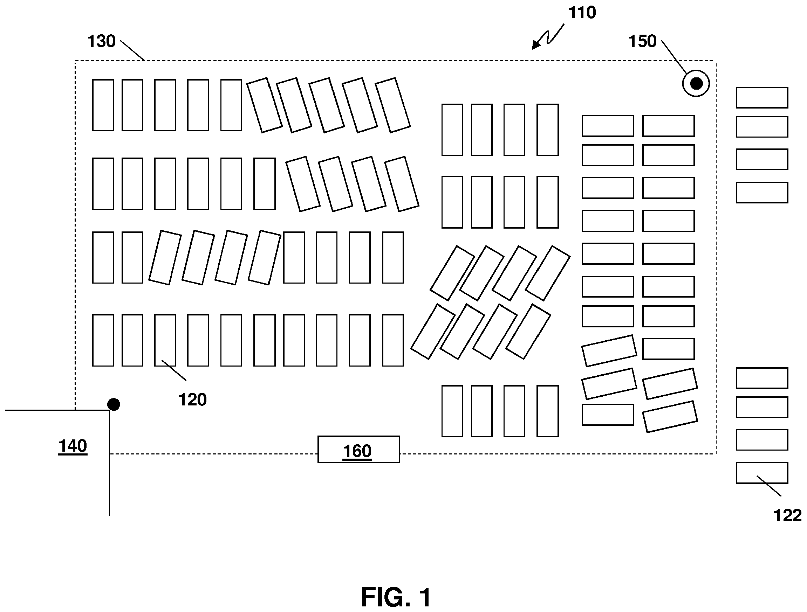

Reference is now made to **Figure 1**, which shows a simplified environment of a shipping yard **110**. Shipping yard **110** includes a plurality of shipping containers **120**. In some cases, the shipping containers **120** may be within a fenced area **130**. However, due to the dynamic nature of the shipping yard, some containers, shown with reference **122**, are outside of the fenced area **130**. Further, in many cases shipping yard **110** may simply be too big to have a fenced area **130**. In many cases, the shipping yard **110** will have a geofence associated with the yard.

Fixed infrastructure points within the shipping yard **110** may exist. For example, a building **140** or a fixed structure **150** such as a lamppost, security pole, or crane, among other options, may exist within the shipping yard **110**.

Shipping containers **120** or **122** may be placed in rows, or stacked, or simply deposited in an empty location.

A shipping yard may have fixed ingress or egress points **160**, which may allow for control of assets entering or exiting the yard and also may allow for a count of assets within the yard.

All or a subset of the vehicles or trailers within the shipping yard include a sensor apparatus. In particular, in one embodiment, a subset of containers **120** or **122** may have associated therewith a sensor apparatus that can be triggered to obtain information about the trailer or vehicle and communicate the results to a centralized server.

Thus, in the embodiments of the present disclosure, sensor systems are included on the vehicle. A transportation company has a plurality of sensor apparatuses operating remotely from a central monitoring station to provide remote sensor data to a management or monitoring hub. The sensors are placed on a trailer, shipping container or similar product to provide a central station with information regarding the container. Such information may include, but is not limited to, information concerning the current location of the trailer or shipping container, the temperature inside the shipping container or trailer, operational parameters such as tire pressure or engine temperature, that the doors on the shipping container or trailer are closed, whether a sudden acceleration or deceleration event has occurred, the tilt angle of the trailer or shipping container, whether the trailer is loaded or unloaded, among other data.

In other embodiments the sensor apparatus may be secured to a vehicle itself. As used herein, the term vehicle can include any motorized vehicle such as a truck, tractor, car, boat, motorcycle, snow machine, among others, and can further include a trailer, shipping container or other such cargo moving container, whether attached to a motorized vehicle or not.

In accordance with the embodiments described herein, a sensor apparatus is any apparatus or computing device that is capable of providing data or information from sensors associated with the sensor apparatus to a central monitoring or control station. Sensors associated with the sensor apparatus may either be physically part of the sensor apparatus, for example a built-in global navigation satellite system (GNSS) chipset, or may be associated with the sensor apparatus through short range wired or wireless communications. For example, a tire pressure monitor may provide information through a Bluetooth^{™} Low Energy (BLE) signal from the tire to the sensor apparatus. In other cases, a camera may be part of the sensor apparatus or may communicate with a sensor apparatus through wired or wireless technologies. Other examples of sensors are possible.

A central monitoring station may be any server or combination of servers that are remote from the sensor apparatus. The central monitoring station can receive data from a plurality of sensor apparatuses.

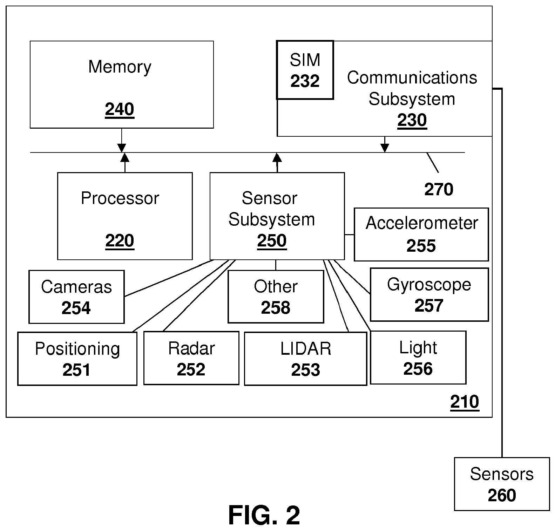

One sensor apparatus is shown with regard to **Figure 2**. The sensor apparatus of **Figure 2** is however merely an example and other sensor apparatuses could equally be used in accordance with the embodiments of the present disclosure.

Reference is now made to **Figure 2**, which shows an example sensor apparatus **210**. Sensor apparatus **210** can be any computing device or network node. Such computing device or network node may include any type of electronic device, including but not limited to, mobile devices such as smartphones or cellular telephones. Examples can further include fixed or mobile devices, such as internet of things devices, endpoints, home automation devices, medical equipment in hospital or home environments, inventory tracking devices, environmental monitoring devices, energy management devices, infrastructure management devices, vehicles or devices for vehicles, fixed electronic devices, among others.

Sensor apparatus **210** comprises a processor **220** and at least one communications subsystem **230**, where the processor **220** and communications subsystem **230** cooperate to perform the methods of the embodiments described herein. Communications subsystem **230** may, in some embodiments, comprise multiple subsystems, for example for different radio technologies.

Communications subsystem **230** allows sensor apparatus **210** to communicate with other devices or network elements. Communications subsystem **230** may use one or more of a variety of communications types, including but not limited to cellular, satellite, Bluetooth^{™}, Bluetooth^{™} Low Energy, Wi-Fi, wireless local area network (WLAN), near field communications (NFC), ZigBee, wired connections such as Ethernet or fiber, among other options.

As such, a communications subsystem **230** for wireless communications will typically have one or more receivers and transmitters, as well as associated components such as one or more antenna elements, local oscillators (LOs), and may include a processing module such as a digital signal processor (DSP). As will be apparent to those skilled in the field of communications, the particular design of the communication subsystem **230** will be dependent upon the communication network or communication technology on which the sensor apparatus is intended to operate.

If communications subsystem **230** operates over a cellular connection, a subscriber identity module (SIM) **232** may be provided to allow such communication. SIM **232** may be a physical card or may be virtual. In some embodiments SIM **232** may also be referred to as a universal subscriber identity module (USIM), as merely an identity module (IM), or as an embedded Universal Integrated Circuit Card (eUICC), among other options.

Processor **220** generally controls the overall operation of the sensor apparatus **210** and is configured to execute programmable logic, which may be stored, along with data, using memory **240**. Memory **240** can be any tangible, non-transitory computer readable storage medium, including but not limited to optical (e.g., CD, DVD, etc.), magnetic (e.g., tape), flash drive, hard drive, or other memory known in the art.

Alternatively, or in addition to memory **240**, sensor apparatus **210** may access data or programmable logic from an external storage medium, for example through communications subsystem **230**.

In the embodiment of **Figure 2**, sensor apparatus **210** may utilize a plurality of sensors, which may either be part of sensor apparatus **210** in some embodiments or may communicate with sensor apparatus **210** in other embodiments. For internal sensors, processor **220** may receive input from a sensor subsystem **250**.

Examples of sensors in the embodiment of **Figure 2** include a positioning sensor **251**, a RADAR sensor **252**, a LIDAR **253**, one or more image sensors **254**, accelerometer **255**, light sensors **256**, gyroscopic sensors **257**, and other sensors **258.** Other sensors may be any sensor that is capable of reading or obtaining data that may be useful for sensor apparatus **210**. However, the sensors shown in the embodiment of **Figure 2** are merely examples, and in other embodiments different sensors or a subset of sensors shown in **Figure 2** may be used.

The positioning sensor may use a positioning subsystem such as a Global Navigation Satellite System (GNSS) receiver which may be, for example, a Global Positioning System (GPS) receiver (e.g. in the form of a chip or chipset) for receiving GPS radio signals transmitted from one or more orbiting GPS satellites. References herein to "GPS" are meant to include Assisted GPS and Aided GPS. Although the present disclosure refers expressly to the "Global Positioning System", it should be understood that this term and its abbreviation "GPS" are being used expansively to include any GNSS or satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another sort of positioning subsystem may be used as well, e.g. a radiolocation subsystem that determines its current location using radiolocation techniques. In other words, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. A Wi-Fi^{™} Positioning System (WPS) may also be used as a positioning subsystem. Radiolocation techniques and/or WPS may also be used in conjunction with GPS in a hybrid positioning system

Other sensors may be external to the sensor apparatus **210** and communicate with the sensor apparatus **210** through, for example, communications subsystem **230**. Such other sensors are shown as sensors **260** and the embodiment of **Figure 2**. For example, a tire pressure monitoring system may communicate over short range communications such as Bluetooth^{™} Low Energy with communications subsystem **230** on the sensor apparatus **210**. Other examples of sensors **260** are possible.

Further, the sensor apparatus **210** of **Figure 2** may, in some embodiments, act as a gateway, and may communicate with other sensor apparatuses (not shown) on the trailer, where the other sensor apparatuses may act as hubs for a subset of the sensors on the vehicle or trailer.

Communications between the various elements of sensor apparatus **210** may be through an internal bus **270** in one embodiment. However, other forms of communication are possible.

Sensor apparatus **210** may be affixed to any fixed or portable platform. For example, sensor apparatus **210** may be affixed to shipping containers, truck trailers, truck cabs in one embodiment. In other embodiments, sensor apparatus **210** may be affixed to any vehicle, including motor vehicles (e.g., automobiles, cars, trucks, buses, motorcycles, etc.), aircraft (e.g., airplanes, unmanned aerial vehicles, unmanned aircraft systems, drones, helicopters, etc.), spacecraft (e.g., spaceplanes, space shuttles, space capsules, space stations, satellites, etc.), watercraft (e.g., ships, boats, hovercraft, submarines, etc.), railed vehicles (e.g., trains and trams, etc.), and other types of vehicles including any combinations of any of the foregoing, whether currently existing or after arising, among others.

Typically, once affixed, the sensor apparatus may be registered with a computing device or server to allow a correlation of an asset type with the sensor apparatus. Thus, if the sensor apparatus is associated with a particular trailer type, such information may be provided to a server or computing device to all allow for asset management or leasing utilizing such sensor apparatus.

Such sensor apparatus **210** may be a power limited device. For example, sensor apparatus **210** could be a battery-operated device that can be affixed to a shipping container or trailer in some embodiments. Other limited power sources could include any limited power supply, such as a small generator or dynamo, a fuel cell, solar power, among other options.

In other embodiments, sensor apparatus **210** may utilize external power, for example from the engine of a tractor pulling the trailer, from a land power source for example on a plugged in recreational vehicle or from a building power supply, among other options.

External power may further allow for recharging of batteries to allow the sensor apparatus **210** to then operate in a power limited mode again. Recharging methods may also include other power sources, such as, but not limited to, solar, electromagnetic, acoustic or vibration charging.

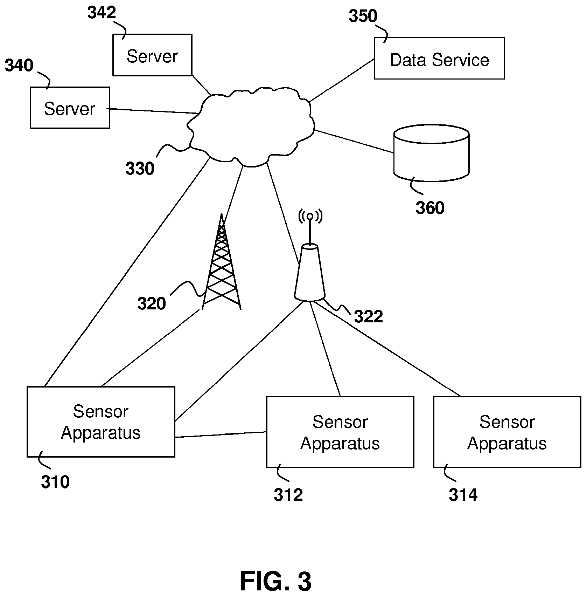

The sensor apparatus from **Figure 2** may be used in a variety of environments. One example environment in which the sensor apparatus may be used is shown with regard to **Figure 3**.

Referring to **Figure 3**, three sensor apparatuses, namely sensor apparatus **310**, sensor apparatus **312**, and sensor apparatus **314** are provided.

In the example of **Figure 3**, sensor apparatus **310** may communicate through a cellular base station **320** or through an access point **322**. Access point **322** may be any wireless communication access point. For example, access point **322** may be a WiFi router or a private router network. Also, a private router network may have a path from the access point name (APN) to a server, and may reduce network latency based on a location of the sensor apparatus in some embodiments.

Further, in some embodiments, sensor apparatus **310** could communicate through a wired access point such as Ethernet or fiber, among other options.

The communication may then proceed over a wide area network such as Internet **330** and proceed to servers **340** or **342**.

Similarly, sensor apparatus **312** and sensor apparatus **314** may communicate with servers **340** or server **342** through one or both of the base station **320** or access point **322**, among other options for such communication.

In other embodiments, any one of sensors **310**, **312** or **314** may communicate through satellite communication technology. This, for example, may be useful if the sensor apparatus is travelling to areas that are outside of cellular coverage or access point coverage.

In other embodiments, sensor apparatus **312** may be out of range of access point **322** and may communicate with sensor apparatus **310** to allow sensor apparatus **310** to act as a relay for communications.

Communication between sensor apparatus **310** and server **340** may be one directional or bidirectional. Thus, in one embodiment sensor apparatus **310** may provide information to server **340** but server **340** does not respond. In other cases, server **340** may issue commands to sensor apparatus **310** but data may be stored internally on sensor apparatus **310** until the sensor apparatus arrives at a particular location. In other cases, two-way communication may exist between sensor apparatus **310** and server **340**.

A server, central server, processing service, endpoint, Uniform Resource Identifier (URI), Uniform Resource Locator (URL), back-end, and/or processing system may be used interchangeably in the descriptions herein. The server functionality typically represents data processing/reporting that are not closely tied to the location of sensor apparatuses **310**, **312**, **314**, etc. For example, the server may be located essentially anywhere so long as it has network access to communicate with sensor apparatuses **310**, **312**, **314**, etc.

Server **340** may, for example, be an asset management system. In this case, server **340** may receive information from sensor apparatuses associated with various trailers or cargo containers, providing information such as the location of such cargo containers, the temperature within such cargo containers, system information such as tire pressure or vibration sensor readings, any unusual events including sudden decelerations, temperature warnings when the temperature is either too high or too low, cargo load levels within the trailer, whether the trailer is currently being used or is reserved for a future time, among other data. The server **340** may compile such information and store it for future reference. It may further alert an operator. For example, idle assets may be alerted to an operator or the need for further assets may be reported to an operator.

In other cases, server **340** may compile information regarding estimated arrival times or departure times at a shipping yard. This information may include delivery schedules for the trailer.

Other examples of functionality for server **340** are possible.

In the embodiment of **Figure 3**, servers **340** and **342** may further have access to third-party information or information from other servers within the network. For example, a data services provider **350** may provide information to server **340**. Similarly, a data repository or database **360** may also provide information to server **340**.

For example, data services provider **350** may be a subscription-based service used by server **340** to obtain current road and weather conditions. In other cases, data services provider **350** may be a computing system operated by a border agency to provide data on general border conditions or on specific border crossings for vehicles in a fleet. In other cases, the data services provider **350** may be associated with a customer of the transportation company and provide order scheduling and delivery requirements. Other functionality for data services provider **350** would be apparent to those skilled in the art.

Data repository or database **360** may for example provide information such as image data associated with a particular location, aerial maps, low latency access point names, virtual SIM information, asset management information, or other such information.

The types of information provided by data service provider **350** or the data repository or database **360** are not limited to the above examples and the information provided could be any data useful to server **340**.

In some embodiments, information from data service provider **350** or the data repository from database **360** can be provided to one or more of sensor apparatuses **310**, **312**, or **314** for processing at those sensor apparatuses.

Utilizing the system and devices from **Figures 2** and **3** above, methods and systems for leasing of assets are provided.

In accordance with one embodiment of the present disclosure, an asset management system may have a plurality of customers who may either provide or lease those assets. As such, each customer subscribes to the asset management system in order to provide information with regard to assets that the company is willing to lease or is looking to lease.

Such asset management system may, for example, be server **340** from the embodiment of **Figure 3**.

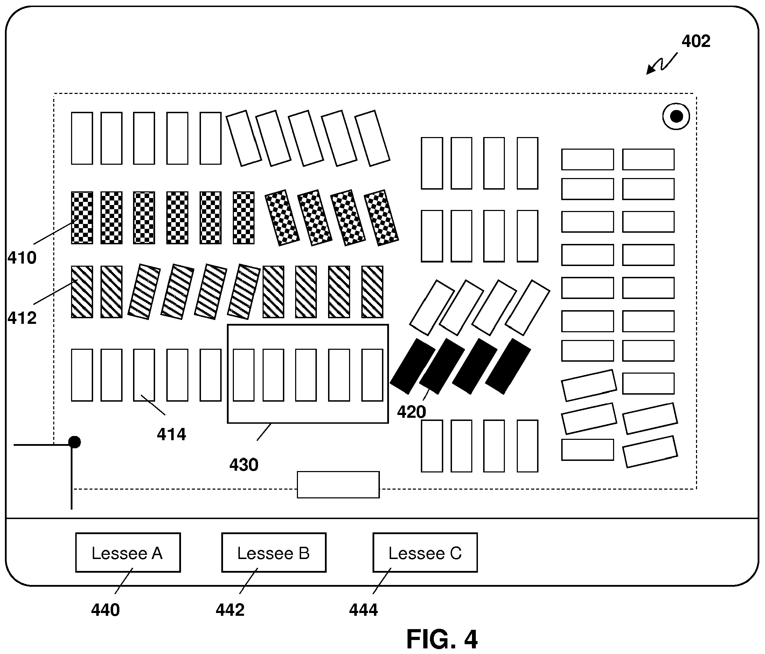

Thus, in one case, an asset screen is provided to a first customer who is willing to lease assets. The first customer may be provided with information on the needs of other lessees and may therefore use the interface to lease assets. Reference is now made to **Figure 4**.

The embodiment of **Figure 4** shows an example user interface **402** which is used to manage and lease assets.

In the example of **Figure 4**, a representation of the shipping yard or geofence of **Figure 1** is provided to a lessor. This representation provides an overview of the various assets within the yard. In some cases, the assets within the yard may be color-coded to indicate to the type of asset. Thus, for example, asset **410** is shown with a first color or pattern while asset **412** is shown with a second color or pattern. Asset **414** is shown without a pattern. Each color or pattern could represent that the asset is available for leasing

Further, assets **420** are shown with a further color and could represent that these assets are either full, already leased, or needed by the transportation company and therefore not available for lease.

In other cases, pulldown menus a could be used to filter or select only certain types of assets to be shown on the screen.

Further, other types of graphical representations or text representations of assets may be provided to user.

The current number of available assets in a shipping yard could be detected in a variety of ways. As used herein, an asset may be any item which may be in the shipping yard, and includes various types of containers, railcars, vehicles such as trucks, and/or a combination of the above, among other options.

In one embodiment, a geofence may exist around the yard, and each vehicle or trailer may be equipped with the sensor apparatus as described above with regard to **Figure 2**. The sensor apparatus may provide the positioning of the trailer or vehicle. In this regard, if the position is reported to be within the geofence then a tally may be made of all trailers or vehicles within the geofence to provide an indication of how many vehicles are currently within the yard. A report may similarly be generated on a vehicle exiting the geofence, allowing in the tally of assets within the shipping yard to be updated accordingly.

In other embodiments, the current number of assets in a yard may be detected in other ways. For example, a yard such as that described in **Figure 1** above may have a fixed number of entry or exit points **160**. The entry or exit points may further include sensors to tally vehicles entering or leaving the yard. For example, such sensors may be cameras which may then be connected to a computer having image recognition software to detect when a vehicle leaves or enters the yard. Such image recognition may also detect the asset type, such as a flatbed trailer or refrigerator truck, for example.

In other cases, weight sensors, magnetic sensors, lasers, or other mechanisms for counting vehicles entering or exiting a yard may be utilized at the entrance and egress points of the yard to keep a tally of the number of assets within the yard. In this case, manual or automatic detection of the type of asset may be used.

In still further embodiments, the number of vehicles in a yard may be compiled by a sensor apparatus on a second vehicle. For example, the sensor apparatus on the second vehicle may include a camera which, when viewing the yard, may allow for a tally of the vehicles within the yard. In particular, the tally may be done by compiling image data at a server or other computing device from one or more vehicles with image capture devices. The second vehicle may be a shunt vehicle or other vehicle within the yard. In some cases, the second vehicle may be another trailer or vehicle that is moving to a parking spot which may provide data back to a server. In still further cases, the second vehicle may be a plurality of vehicles that include the sensor apparatus and the tally may be a composite of data provided by the plurality of the vehicles.

In still further embodiments, a fixed camera may be positioned, for example, on a pole or a crane, which may have a view of the yard or part of the yard and allow for image processing to determine the current number and type of assets in the yard or that part of the yard.

In still further embodiments, the number of assets in the shipping yard may be found by getting the GPS locations of all assets located within the geofence of the yard.

In still further embodiments, a yard tally may be entered by workers within the yard into a computing system. Thus a manual count by people is possible, with the data being entered into a computer system.

Other options for assessing the current number of assets currently within the yard are also possible.

Further, in order for an asset to be available, besides being present in the yard, it needs to be empty. In this regard, an asset may be determined to be empty through various mechanisms. In a first mechanism, a sensor apparatus such as that described above with regard to **Figure 2** is used to determine whether the asset is empty. The sensor apparatus includes a cargo detection system such as a laser and detector, a time of flight sensor, a camera and light. Such cargo detection system are utilized to determine whether the asset is empty.

In other cases which are not part of the claimed invention, if the asset is an open platform such as a flatbed trailer, image detection apparatuses when the vehicles in the yard, such as through a fixed camera on a pole or on moving cameras on other trailers or yard vehicles may be used to determine whether the open platform is loaded or not.

In further systems which are not part of the claimed invention, a scale or weight system at the ingress point for the yard may determine if an empty trailer is being brought into the yard. For example, the weight of the trailer may indicate that it is empty.

In still further embodiments which are not part of the claimed invention, once a trailer has been unloaded, information about the unloaded state of the trailer may be propagated to a computing device and utilized for a pool management asset system.

In still further embodiments which are not part of the claimed invention, a yard tally may be entered by workers within the yard into a computing system indicating assets which are empty. Thus a manual count by people is possible, with the data being entered into a computer system.

In still further embodiments which are not part of the claimed invention, an asset may not be available if it is scheduled to be utilized for another delivery. In this case, a delivery system may be cross-referenced with that the asset management system to ensure that assets are not allocated twice.

For example, when inputting a delivery, a customer of the transportation service may specify the type of asset that is required for such delivery. In other cases, default asset types might be provided it to a customer, and in this case, a customer may need to change such default asset type if a different type of asset is needed.

In some cases, the customer of the transportation company may set a delivery time and/or location. In this case, the need for the asset can be time limited to allow the asset to be freed for future uses after the delivery is completed.

By specifying the asset type needed for a delivery, an asset management system can determine whether such class or type of asset exists within the yard or geofence.

Further, while available assets may be shown with a current timestamp, in some cases, future availability may be needed. For example, if the lease is for a future time, then the assets that will be available at that future time are needed. In this case, the assets may be correlated with booking or shipping data to find future availability.

In particular, from shipment information, a transportation management system may know when assets are scheduled to enter or leave a yard. Such information may be utilized to project future availability of assets in the yard.

For example, if assets are allocated to future deliveries, then when a new delivery is scheduled those same assets cannot be allocated to such new delivery unless the assets will be free by the time the delivery is scheduled.

In other cases, scheduled deliveries into the yard or geofence may leave a trailer or other asset free for future deliveries. In this case, the timing of the arrival of the asset at the yard, along with an unloading time, may be considered by the asset management system.

The future information may, in some cases, include a buffer time around the scheduled arrival. In this way, assets that arrive late can be still be included in the tally of available assets based on the buffer.

Further, the future information may be correlated to sensor data on a vehicle or trailer. For example, an asset that is scheduled to arrive in two hours but is showing from its GPS positioning and that it is at least three hours away from the yard could allow for the calculation of available assets be adjusted accordingly. Similarly, when an asset clears a border crossing more quickly than scheduled, this may bring forward the arrival time of the asset at the yard and allow the yard to adjust available assets accordingly.

Based on the values, a future projection for available assets may be made. Such future projection may then be provided on a user interface such as that described with regard to **Figure 4** for future leasing of assets.

In the embodiment of **Figure 4**, a lessor may be notified that a lessee is looking for a particular number of assets. In this case, the lessor selects one or more assets. The selection, for example, may include drawing a box such as box **430** around the desired number of assets. Rather than a box, any shape may be used. Further, instead of drawing a shape, the assets could be selected individually and grouped together. For example, in some cases the operator may hold the shift key down while selecting assets to indicate that a plurality of assets are being selected.

In the case of a text representation, a check box may be provided to select assets. In other cases, the assets may be highlighted in other ways or selected in other ways. For example, a user may be able to draw one or more loops around one or more assets to select the one or more assets within the loop. The loop may be drawn on a map using a suitable user interface. A user may also be able to tap on or click one or more assets shown on the map to effect selection. The user interface may provide the map enters an asset selection mode in order to enable selection of the assets. Drawing a loop around assets shown on a map allows an easy way to distinguish assets visually rather than having to make use of asset IDs, which in a system with a large number of assets can be very laborious.

Once one or more assets are selected, for example utilizing box **430**, the one or more assets may be dragged to a particular lessee. Boxes **440**, **442** and **444** show various lessees which allow for an operator to drag a box **430** to these lessees to lease the asset to the particular lessee.

Again, instead of boxes, various options for leasing could be provided. This may include, for example, a menu. Thus when an operator right clicks within box **430** a list of lessees may be provided.

Once the assets are dragged an operator for the lessor may be prompted to ensure that the action was desired. For example, a pop up may be presented on user interface **402.** However, the prompt to ensure the action was desired is an optional step.

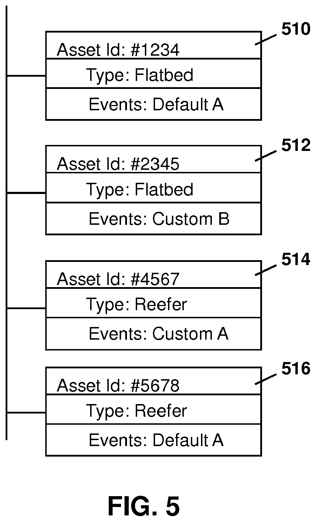

The actual allocation of the assets may be done in a variety of ways. The assets themselves will typically be represented in the asset management system utilizing a database. For example, reference is now made to **Figure 5**.

In the embodiment of **Figure 5** a variety of assets are shown within a database. For example, in the example of **Figure 5****,** four assets are shown. These assets are labelled as asset **510**, **512**, **514** and **516**.

In the example of **Figure 5****,** each asset includes an identifier, an asset type, and an event filter. However, such fields are merely provided as examples and in practice each asset could have more or fewer fields and may not include the particular fields shown in the embodiment of **Figure 5**.

In the case of the transportation of goods, the event filter may allow for data from a sensor apparatus such as that shown with regard to **Figure 2** to be filtered and provide a notification or prompt an action based on the event filter.

Thus, for example, if the sensor apparatus is associated with a trailer, the event filter may include temperature thresholds. For example, if the asset is a reefer truck, then temperature thresholds may be set to just below freezing, and if the temperature exceeds this threshold then an alert or other notification may be provided to the owner of the asset.

Similarly, geofences may be assigned for each asset, which may provide for notifications or alarms if the asset enters or leaves such geofences.

Other thresholds or parameters can be set into the event filter to provide for actions or notifications based on such events.

In some cases, a transportation company may have default policies. The default policy may be based on an asset type and may set certain specific thresholds or values for event filtering. This default policy may be assigned to each asset and may then be modified as required by the operator of the asset.

Thus, in the embodiment of **Figure 5****,** the event filters are shown as default or custom, and may have more granularity by providing a specific default policy or a specific custom policy.

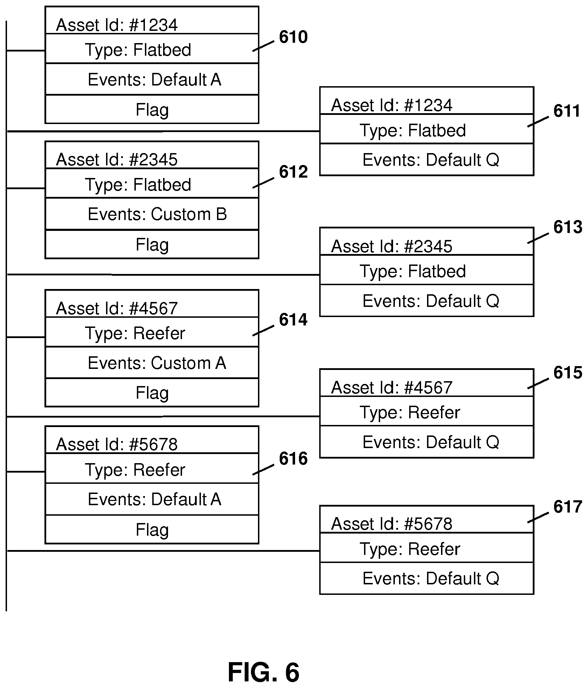

In accordance with one embodiment of the present disclosure, once an asset is leased, the database entry for the asset is duplicated within the asset management system. Reference is now made to **Figure 6**.

In the embodiment of **Figure 6**, the entries **610**, **612**, **614** and **616** correspond with entries **510**, **512**, **514** and **516** from **Figure 5****,** with the exception that a flag or pointer may be added to such entries.

Upon an operator assigning certain assets to a lessee, the assets are then be duplicated in the database. Thus, as shown in **Figure 6**, entry **611** is a duplication of entry **610**. Entry **611** is however associated with the lessee. Further, a default event filter that corresponds with the lessee may be assigned to the asset entry.

Similarly, entry **613** is a duplication of entry **612** with a default policy associated with the lessee assigned to it.

Entry **615** is a duplication of entry **614** with a default policy associated with the lessee assigned to it.

Entry **617** is a duplication of entry **616** with a default policy associated with the lessee assigned to it.

A flag and/or a pointer may be provided in the original entry to indicated that such asset has been leased, and provide a pointer to the duplicate record. Therefore, the flag on entry **610** would point to entry **611**. Similarly the flag on entry **612** would point to entry **613**. The flag on entry **614** would point entry **615**. Also, the flag on entry **616** would point to entry **617**.

In this way, when a sensor apparatus such as that described above with regard to **Figure 2**, and associated with a particular asset, sends data to the asset management system, the asset management system can identify the entry in the database associated with the sensor apparatus and extract the event filters. The event filters could identify whether the data within the packet received from the sensor apparatus should cause an alert or other action to be performed.

However, because the entry is duplicated, as provided with the flag and/or pointer, the data may then be processed again based on the event filters associated with the duplicate asset record. In this case, the alert or notification may be provided to the lessee rather than the lessor.

Further, in some cases, a default policy on an asset may change when the asset is leased. In this case, the event filters on the lessor may be assigned a default policy temporarily while the asset is leased. For example, the lessor may not care about over temperature conditions, but may care but sudden acceleration or deceleration events which may jeopardize of the asset. Conversely, the lessee that is transporting goods using the leased asset may care about over temperature conditions. In each case, both of the lessor and the lessee may receive notifications based on the event filters assigned for the asset.

Once the asset is returned to the lessor, the duplicate entries, namely entries **611**, **613**, **615** and **617**, may be deleted. Prior to deleting the entry, the lessor may in some cases need to confirm that the asset has been returned.

Deleting the entry may also delete the flags and pointers in the original entry associated with that they lease.

Further, in some cases, lease information for the asset may be stored in the original entry for that asset. In this way, the lessor may be able to identify who has previously leased the asset and the history of the asset.

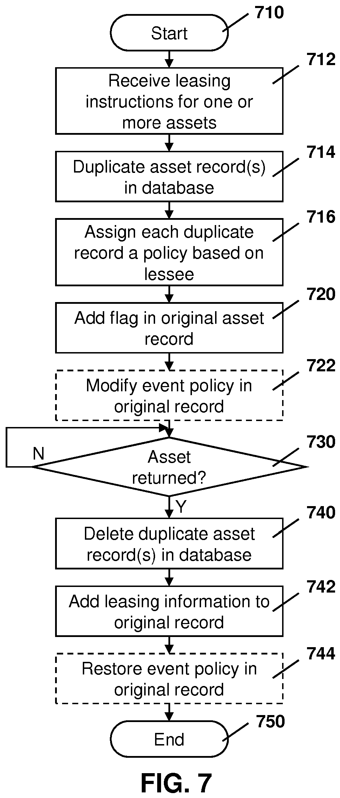

Therefore, one example of a process of leasing an asset at a server is provided with regard to **Figure 7**. The process of **Figure 7** starts at block **710** and proceeds to block **712**, in which an asset management server may receive leasing instructions for one or more assets. Leasing instructions are received based on operator interaction with the user interface **402** from **Figure 4**. In other embodiments which are not part of the claimed invention, leasing instructions may be received from other computing devices based on prearranged contracts, based on operator interactions with lists, among other options.

The process then proceeds to block **714** in which the leasing instructions are parsed to determine the original asset records. These asset records are then duplicated in the database based on the received leasing instructions. Such duplication is, for example, shown above with regard to **Figure 6**.

The process then proceeds to block **716** in which each duplicate record is assigned a policy based on the lessee. As indicated above, the policy may be default event filters for the particular type of asset for the lessee.

The process then proceeds to block **720** in which a flag or pointer is added to the original asset record to indicate that the duplicate record exists and the location of the duplicate record.

From block **720** the process proceeds to block **722** and optionally may modify the event policy in the original record. For example, a lessor may have default policies for particular asset types when the asset is leased. In this case, those default policies for a leased asset may be applied to the original record. Thus, when performing event filtering, the new event policy may be used to provide alerts which are of interest to the lessor based on the status of the asset.

From block **722**, or from block **720** if block **722** is not part of the process, the process then proceeds to block **730** in which a check is made to determine whether the asset has been returned. If the asset has not been returned, the process continues to wait for the asset to be returned at block **730**. As indicated above, the asset being returned may involve confirmation by the lessor of the asset being returned.

Once the asset is returned, the process proceeds to block **740** in which the duplicate asset record is deleted from the database.

The process may then proceed to block **742** in which leasing information about the asset may be added to the original record to provide the lessor with a leasing history for that asset.

From block **742**, the process may optionally proceed to block **744** in which the event policy is restored in the original record. As will be appreciated by those in the art, if the policy was modified at block **722**, once the lease is finished the original policy may need to be restored. This may involve storing the original policy in a location associated with the asset and then restoring such policy once the lease is concluded.

From block **744**, or from block **742** if the process avoids block **744**, the process then proceeds to block **750** and ends.

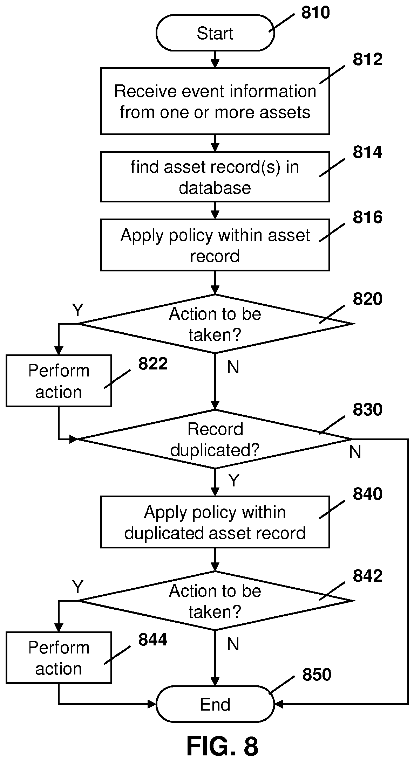

One process for reacting to sensor data is shown in **Figure 8**. In particular, the process of **Figure 8** starts at block **810** and proceeds to block **812** in which event information may be received from one or more assets. Such event information may, for example, include a packet of data with the various sensor readings. The data may be configured in a particular format and may be receive periodically from each asset. Further, in some cases the event data may be received based on a sensor apparatus detecting anomalous conditions.

From block **812**, the process proceeds to block **814** in which asset records associated with the event data received at block **812** are found. In this case, the event records which are found are associated with the customer or lessor.

The process then proceeds to block **816** in which policies within the found asset records are applied to the event data received at block **812**. For example, the policies within the record may indicate that the customer or lessor wants to know when over-temperature conditions exist, when sudden deceleration events occur, when a vehicle has entered or exited or geofence, among other options.

Once the policies are applied to the event data, the process proceeds to block **820** in which a determination is made on whether an action should be taken. For example, the action should be taken if thresholds are met, if geofence locations are exited or entered, among other options.

If an action is to be taken, the process proceeds to block **822** in which the action is performed. Such action may include alerting an operator, alerting a driver, providing audio, sensory, or visual cues, redirecting autonomous vehicles, among other options.

From block **820**, if no action is to be taken, or from block **822**, the process proceeds to block **830** in which a check is made to determine whether the record is duplicated. For example, this may involve checking whether the original record includes a flag or pointer to a duplicate record.

If the record is duplicated, the process proceeds to block **840** in which a policy within the duplicate asset record is applied to the event data. For example, such policy may be associated with the lessee of the asset.

From block **840**, the process proceeds to block **842** in which a check is made to determine whether an action should be taken based on the processing at block **840**. If an action is to be taken, the process proceeds to block **844** in which the action is performed. The actions performed at block **822** and **844** may be different in some cases. Further, the checks at block **820** and block **842** may be different based on the different event policies within the original and duplicate records.

From block **844**, or if no action needs to be taken from block **842**, the process proceeds to block **850** and ends.

Further, from block **830**, if the record is not duplicated in the process proceeds to block **850** and ends.

Based on the above, assets may be leased easily by selecting one or more assets for example on a user interface and performing bulk leasing actions. The actions allow for the records to be duplicated in the database temporarily while of the asset is leased, thereby allowing different policies to be applied based on the interested party. Once the asset is returned, the duplicate record may be deleted from the database and any event policies restored for the lessor.

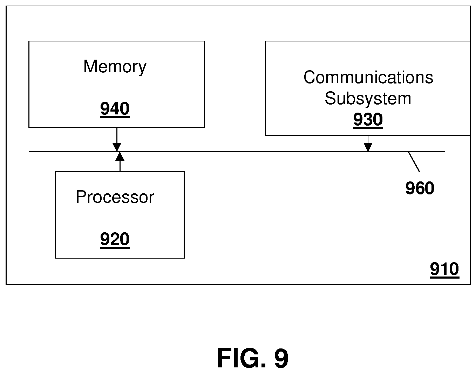

A server such as servers **340**, **342** or **350** may be any network node. For example, one simplified server that may perform the embodiments described above is provided with regards to **Figure 9**.

In **Figure 9**, server **910** includes a processor **920** and a communications subsystem **930**, where the processor **920** and communications subsystem **930** cooperate to perform the methods of the embodiments described herein.

The processor **920** is configured to execute programmable logic, which may be stored, along with data, on the server **910**, and is shown in the example of **Figure 9** as memory **940**. The memory **940** can be any tangible, non-transitory computer readable storage medium, such as optical (e.g., CD, DVD, etc.), magnetic (e.g., tape), flash drive, hard drive, or other memory known in the art. In one embodiment, processor **920** may also be implemented entirely in hardware and not require any stored program to execute logic functions.

Alternatively, or in addition to the memory **940**, the server **910** may access data or programmable logic from an external storage medium, for example through the communications subsystem **930**.

The communications subsystem **930** allows the server **910** to communicate with other devices or network elements.

Communications between the various elements of the server **910** may be through an internal bus **960** in one embodiment. However, other forms of communication are possible.

While operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be employed. Moreover, the separation of various system components in the implementation descried above should not be understood as requiring such separation in all implementations, and it should be understood that the described program components and systems can generally be integrated together in a signal software product or packaged into multiple software products. In some cases, functions may be performed entirely in hardware and such a solution may be the functional equivalent of a software solution

Also, techniques, systems, subsystems, and methods described and illustrated in the various implementations as discrete or separate may be combined or integrated with other systems, modules, techniques, or methods. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made.

While the above detailed description has shown, described, and pointed out the fundamental novel features of the disclosure as applied to various implementations, it will be understood that various omissions, substitutions, and changes in the form and details of the system illustrated may be made by those skilled in the art. In addition, the order of method steps is not implied by the order they appear in the claims.

When messages are sent to/from an electronic device, such operations may not be immediate or from the server directly. They may be synchronously or asynchronously delivered, from a server or other computing system infrastructure supporting the devices/methods/systems described herein. The foregoing steps may include, in whole or in part, synchronous/asynchronous communications to/from the device/infrastructure. Moreover, communication from the electronic device may be to one or more endpoints on a network. These endpoints may be serviced by a server, a distributed computing system, a stream processor, etc. Content Delivery Networks (CDNs) may also provide may provide communication to an electronic device. For example, rather than a typical server response, the server may also provision or indicate a data for content delivery network (CDN) to await download by the electronic device at a later time, such as a subsequent activity of electronic device. Thus, data may be sent directly from the server, or other infrastructure, such as a distributed infrastructure, or a CDN, as part of or separate from the system.

Typically, storage mediums can include any or some combination of the following: a semiconductor memory device such as a dynamic or static random access memory (a DRAM or SRAM), an erasable and programmable read-only memory (EPROM), an electrically erasable and programmable read-only memory (EEPROM) and flash memory; a magnetic disk such as a fixed, floppy and removable disk; another magnetic medium including tape; an optical medium such as a compact disk (CD) or a digital video disk (DVD); or another type of storage device. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

## Claims

1. A method at a computing device communicating with a plurality of sensor apparatuses within an asset management system, the method comprising:
receiving (712) a leasing indication at the computing device, the leasing indication providing one or more assets in the asset management system that are leased to a lessee, the one or more assets having been selected by a user interface of the computing device, the user interface being a representation of a shipping yard or geo-fence, wherein assets are represented with colors or patterns to represent a respective availability of assets to be leased, wherein an asset is determined to be available if it is empty and present in the shipping yard or geo-fence in a current or future time, wherein the leasing indication is based on selection and assignment on the user interface of the one or more assets to the lessee, wherein the user interface includes a box or bucket for each lessee, whereby each asset or group of assets can be dragged to the box or bucket to provide the leasing indication;
duplicating (714) an asset record in an asset database within the asset management system for each of the selected one or more assets, creating a duplicated record in the asset database;
assigning (716) a policy based on the lessee to the duplicated record;
providing (720) a pointer within the asset record to the duplicated record;
receiving (812) periodically sensor data for the one or more assets from the plurality of sensor apparatuses (210) each being affixed to a respective asset, the sensor apparatuses (210) including one or more sensors providing temperature and system information associated with the one or more assets, the sensor data including said temperature and system information, the sensor apparatuses (210) further including a cargo detection system to determine, for the availability determination, whether the one or more assets are empty, wherein the cargo detection system comprises:
a laser and detector,
a time-of-flight sensor, or
a camera and light,
finding (814) asset records associated with the received sensor data, the found asset records associated with a lessor, wherein policies within the found asset records indicate that the lessor wants to know when over-temperature conditions exist, when sudden deceleration events occur, and/or when a vehicle has entered or exited the shipping yard or geo-fence;
applying the policies within the found asset records to the received sensor data, applying (840) the policy for the lessee assigned to the duplicated record to the received sensor data and
providing separate reports to the lessor and lessee based on the applying steps.

2. The method of claim 1, wherein a plurality of assets is selectable at once.

3. The method of claim 2, wherein the duplicating (714) occurs for each of the selected plurality of assets.

4. The method of any previous claim, further comprising:
receiving (730) an indication that the one or more assets have been returned; and
deleting (740) the duplicated record for the one or more assets.

5. The method of any previous claim, wherein the sensor apparatus (210) includes or communicates with at least one of a positioning sensor (251), a radar sensor (252), a lidar (253), an image sensor (254), an accelerometer (255), a light sensor (256) or a gyroscopic sensor (257).

6. The method of any previous claim, further comprising:
modifying (722) a policy for the one or more assets for the lessor upon receiving (712) the leasing indication; and
restoring (744) the policy for the asset for the lessor once the one or more assets are returned (730).

7. The method of any previous claim, further comprising modifying the asset record to include information about the lease.

8. The method of any previous claim, further comprising redirecting the one or more assets to a location associated with the lessee.

9. A computing device within an asset management system, the computing device comprising:
a processor (220, 920); and
a communications subsystem (230, 930),
wherein the computing device (210, 910) is configured to perform the method of any of claims 1 to 8.

10. A computer readable medium for storing instruction code which, when executed by a processor (220, 920) of a computing device (210, 910) within an asset management system, cause the computing device (210, 910) to perform the method of any of claims 1 to 8.

## Patentansprüche

1. Verfahren in einem Rechengerät, das mit mehreren Sensorvorrichtungen innerhalb eines Assetverwaltungssystems kommuniziert, das Verfahren umfassend:
Empfangen (712) einer Leasing-Indikation im Rechengerät, wobei die Leasing-Indikation ein oder mehr Assets im Assetverwaltungssystem vorsieht, die an einen Leasingnehmer geleast sind, wobei das eine oder mehr Assets durch eine Benutzeroberfläche des Rechengeräts ausgewählt wurden, wobei die Benutzeroberfläche eine Darstellung eines Frachthafens oder Geo-Zauns ist, wobei Assets mit Farben oder Mustern zum Darstellen einer jeweiligen Verfügbarkeit von zu leasenden Assets dargestellt sind, wobei ein Asset als verfügbar bestimmt wird, wenn es leer und im Frachthafen oder Geo-Zaun zu einer aktuellen oder zukünftigen Zeit vorhanden ist, wobei die Leasing-Indikation auf Auswahl und Vergabe, auf der Benutzeroberfläche, des einen oder mehr Assets an den Leasingnehmer basiert, wobei die Benutzeroberfläche einen Kasten oder Bucket für jeden Leasingnehmer enthält, wobei jedes Asset oder jede Gruppe von Assets zum Vorsehen der Leasing-Indikation in den Kasten oder Bucket gezogen werden kann;
Duplizieren (714) eines Asset-Datensatzes in einer Datenbank innerhalb des Assetverwaltungssystems für jedes des ausgewählten einen oder mehr Assets, wodurch ein duplizierter Datensatz in der Asset-Datenbank erstellt wird;
Vergeben (716) einer Richtlinie basierend auf dem Leasingnehmer an den duplizierten Datensatz;
Vorsehen (720) eines Zeigers innerhalb des Asset-Datensatzes zum duplizierten Datensatz;
periodisches Empfangen (812) von Sensordaten für das eine oder mehr Assets von den mehreren Sensorvorrichtungen (210), die jede an einem jeweiligen Asset angebracht sind, wobei die Sensorvorrichtungen (210) einen oder mehr Sensoren enthalten, die Temperatur und Systeminformation im Zusammenhang mit dem einen oder mehr Assets vorsehen, wobei die Sensordaten die Temperatur und Systeminformation enthalten, wobei die Sensorvorrichtungen (210) ferner ein Frachterkennungssystem zum Bestimmen, für die Verfügbarkeitsbestimmung, ob das eine oder mehr Assets leer sind, enthalten, wobei das Frachterkennungssystem umfasst:
einen Laser und Detektor,
einen Time-of-Flight-Sensor, oder
eine Kamera und Licht,
Auffinden (814) von Asset-Datensätzen, die mit den empfangenen Sensordaten assoziiert sind, wobei die aufgefundenen Asset-Datensätze mit einem Leasinggeber assoziiert sind, wobei Richtlinien innerhalb der aufgefundenen Asset-Datensätze anzeigen, dass der Leasinggeber Bescheid wissen will, wenn Übertemperaturbedingungen vorliegen, wenn plötzliche Verlangsamungsereignisse auftreten, und/oder wenn ein Fahrzeug in den Frachthafen oder Geo-Zaun eingefahren ist oder diesen verlassen hat;
Anwenden der Richtlinien innerhalb der aufgefundenen Asset-Datensätze auf die empfangenen Sensordaten, Anwenden (840) der Richtlinie für den Leasingnehmer, die an den duplizierten Datensatz vergeben wurde, auf die empfangenen Sensordaten und Zuführen von separaten Berichten an den Leasinggeber und den Leasingnehmer basierend auf den Anwendungsschritten.

2. Verfahren nach Anspruch 1, wobei mehrere Assets gleichzeitig auswählbar sind.

3. Verfahren nach Anspruch 2, wobei das Duplizieren (714) für jedes der ausgewählten mehreren Assets erfolgt.

4. Verfahren nach einem der vorhergehenden Ansprüche, ferner umfassend:
Empfangen (730) einer Indikation, das das eine oder mehr Assets zurückgeführt wurden; und
Löschen (740) des duplizierten Datensatzes für das eine oder mehr Assets.

5. Verfahren nach einem der vorhergehenden Ansprüche, wobei die Sensorvorrichtung (210) zumindest eines eines Positionssensors (251), eines Radarsensors (252), eines Lidar (253), eines Bildsensors (254), eines Beschleunigungsmessers (255), eines Lichtsensors (256) oder eines Gyrosensors (257) enthält oder damit kommuniziert.

6. Verfahren nach einem der vorhergehenden Ansprüche, ferner umfassend:
Modifizieren (722) einer Richtlinie für das eine oder mehr Assets für den Leasinggeber nach dem Empfangen (712) der Leasing-Indikation; und
Wiederherstellen (744) der Richtlinie für das Asset für den Leasinggeber, sobald das eine oder mehr Assets zurückgeführt sind (730).

7. Verfahren nach einem der vorhergehenden Ansprüche, ferner umfassend Modifizieren des Asset-Datensatzes zum Einbeziehen von Information über das Leasing.

8. Verfahren nach einem der vorhergehenden Ansprüche, ferner umfassend Umleiten des einen oder mehr Assets an eine Stelle, die mit dem Leasingnehmer assoziiert ist.

9. Rechengerät innerhalb eines Assetverwaltungssystems, das Rechengerät umfassend:
einen Prozessor (220, 920); und
ein Kommunikationssubsystem (230, 930),
wobei das Rechengerät (210, 910) zum Ausführen des Verfahrens nach einem der Ansprüche 1 bis 8 konfiguriert ist.

10. Computerlesbares Medium zum Speichern von Anweisungscode, der, wenn er durch einen Prozessor (220, 920) eines Rechengeräts (210, 910) innerhalb eines Assetverwaltungssystems ausgeführt wird, bewirkt, dass das Rechengerät (210, 910) das Verfahren nach einem der Ansprüche 1 bis 8 ausführt.

## Revendications

1. Procédé au niveau d'un dispositif informatique communiquant avec une pluralité d'appareils de capteurs dans un système de gestion de biens, le procédé comprenant de:
recevoir (712) une indication de location au niveau du dispositif informatique, l'indication de location fournissant un ou plusieurs biens dans le système de gestion de biens qui sont loués à un locataire, le ou les biens ayant été sélectionnés par une interface d'utilisateur du dispositif informatique, l'interface utilisateur étant une représentation d'un site d'entreposage ou d'une géo-clôture, dans laquelle les biens sont représentés avec des couleurs ou des motifs pour représenter une disponibilité respective des biens à louer, dans lequel un bien est déterminé comme étant disponible s'il est vide et présent dans le site d'entreposage ou la géo-clôture à un moment actuel ou futur, dans lequel l'indication de location est basée sur la sélection et l'attribution sur l'interface d'utilisateur d'un ou plusieurs biens au locataire, dans lequel l'interface utilisateur comprend une boîte ou un seau pour chaque locataire, moyennant quoi chaque bien ou groupe de biens peut être déplacé vers la boîte ou le seau pour fournir l'indication de location;
dupliquer (714) un enregistrement de biens dans une base de données de biens à l'intérieur du système de gestion de biens pour chacun des un ou plusieurs biens sélectionnés, créer un enregistrement dupliqué dans la base de données de biens;
attribuer (716) une politique basée sur le locataire à l'enregistrement dupliqué;
fournir (720) un pointeur dans l'enregistrement du bien vers l'enregistrement dupliqué;
recevoir (812) périodiquement des données de capteur pour un ou plusieurs biens de la pluralité d'appareils de capteur (210) chacun étant fixé à un bien respectif, les appareils de capteur (210) comprenant un ou plusieurs capteurs fournissant des informations de température et de système associées à un ou plusieurs biens, les données de capteur comprenant lesdites informations de température et de système, les appareils de détection (210) comprenant en outre un système de détection de cargaison pour déterminer, pour la détermination de disponibilité, si le ou les biens sont vides, dans lequel le système de détection de cargaison comprend:
un laser et un détecteur,
un capteur de temps de vol, ou
une caméra et une lumière,
trouver (814) des enregistrements de biens associés aux données de capteur reçues, les enregistrements de biens trouvés étant associés à un bailleur, dans lequel des politiques dans les enregistrements de biens trouvés indiquent que le bailleur veut savoir quand des conditions de surchauffe existent, quand des événements de décélération soudains se produisent, et/ou quand un véhicule est entré ou sorti du site d'entreposage ou de la géo-clôture;
appliquer les politiques dans les enregistrements de biens trouvés aux données de capteur reçues, appliquer (840) la politique pour le locataire attribué à l'enregistrement dupliqué aux données de capteur reçues, et fournir des rapports séparés au bailleur et au locataire sur la base des étapes d'application.

2. Procédé selon la revendication 1, dans lequel une pluralité de biens est sélectionnable à la fois.

3. Procédé selon la revendication 2, dans lequel la duplication (714) se produit pour chacun de la pluralité sélectionnée de biens.

4. Procédé selon une quelconque des revendications précédentes, comprenant en outre de:
recevoir (730) une indication qu'un ou plusieurs biens ont été restitués ; et
supprimer (740) l'enregistrement dupliqué pour le ou les biens.

5. Procédé selon une quelconque des revendications précédentes, dans lequel l'appareil de capteur (210) comprend ou communique avec au moins un d'un capteur de positionnement (251), un capteur radar (252), un lidar (253), un capteur d'image (254), un accéléromètre (255), un capteur de lumière (256) ou un capteur gyroscopique (257).

6. Procédé selon une quelconque des revendications précédentes, comprenant en outre de:
modifier (722) une politique pour le ou les biens pour le bailleur lors de la réception (712) de l'indication de location ; et
rétablir (744) la police du bien pour le bailleur une fois qu'un ou plusieurs biens sont restitués (730).

7. Procédé selon une quelconque des revendications précédentes, comprenant en outre la modification de l'enregistrement du bien pour inclure des informations sur le bail.

8. Procédé selon une quelconque des revendications précédentes, comprenant en outre la redirection du ou des biens vers un emplacement associé au locataire.

9. Dispositif informatique dans un système de gestion de biens, le dispositif informatique comprenant:
un processeur (220, 920); et
un sous-système de communication (230, 930),
dans lequel le dispositif informatique (210, 910) est configuré pour exécuter le procédé selon une quelconque des revendications 1 à 8.

10. Support lisible par ordinateur pour mémoriser un code d'instruction qui, lorsqu'il est exécuté par un processeur (220, 920) d'un dispositif informatique (210, 910) dans un système de gestion de biens, amène le dispositif informatique (210, 910) à exécuter le procédé d'une quelconque des revendications 1 à 8.
